# EUROPEAN PATENT SPECIFICATION

(11) **EP 1 486 393 B1**
(45) Date of publication and mention of the grant of the patent: **18.07.2007**
(21) Application number: 03425370.8
(22) Date of filing: 10.06.2003
(51) Int. Cl.: B62B 3/06, B66F 9/075, B62D 7/02

(54) **A device for handling pallets**
Vorrichtung zum Handhaben von Paletten
Dispositif pour la manutention de palettes

(43) Date of publication of application: 15.12.2004
(73) Proprietor: Merlo Project S.r.l., I-12020 S. Defendente di Cervasca (Cuneo) (IT)
(72) Inventor: Perlo, Marco, 12100 Cuneo (IT); VIOLA, Mario Ferdinando, 12080 Vicoforte (IT)
(74) Representative: Marchitelli, Mauro

(56) References cited:
- WO-A-01/21523
- US-A- 2 913 063
- US-B1- 6 354 394

## Description

The present invention relates to a device for handling pallets. More precisely, the invention regards a device that can be actuated manually, is mobile on rolling members, and is equipped with a load supporting structure which can be inserted underneath a pallet and which is mobile in a vertical direction for lifting the pallet off the floor.

The devices of a known type are normally mobile on rollers which have a diameter smaller than the free height from the ground of the pallets in order to enable insertion of the load supporting structure underneath the pallets.

WO-A-0121523 discloses a device for handling pallets according to the preamble of claim 1, comprising: a base structure, a load supporting structure provided with large diameter wheels which are movable between an operative position and a folded inoperative position, and a bottom supporting structure provided with rollers with a diameter substantially smaller than the diameter of said wheels.

The reduced dimensions of the roller of the known devices represents a problem when said devices are used on irregular surfaces or in the presence of obstacles, as frequently occurs in building sites and the like.

The purpose of the present invention is to provide a device for handling pallets of an improved type, which will enable the aforesaid drawback to be overcome.

According to the present invention, said purpose is achieved by a device for handling pallets having the characteristics forming the subject of the claim 1.

The present invention will now be described in detail with reference to the attached drawings, which are provided purely by way of non-limiting example and in which:
- Figure 1 is a perspective view of a device according to the present invention;
- Figure 2 is a top plan view of the device of Figure 1;
- Figures 3 and 4 are side views of the device illustrated in Figure 1 in a lowered position and raised position, respectively;
- Figure 5 is an exploded perspective view of the device of Figure 1;
- Figures 6, 7 and 8 are partial perspective views of the part indicated by the arrow VI in Figure 1 in three different operating positions;
- Figures 9 and 10 are perspective views of the detail indicated by the arrow IX in Figure 8 in two operating positions; and
- Figure 11 is a hydraulic diagram of the device according to the invention.

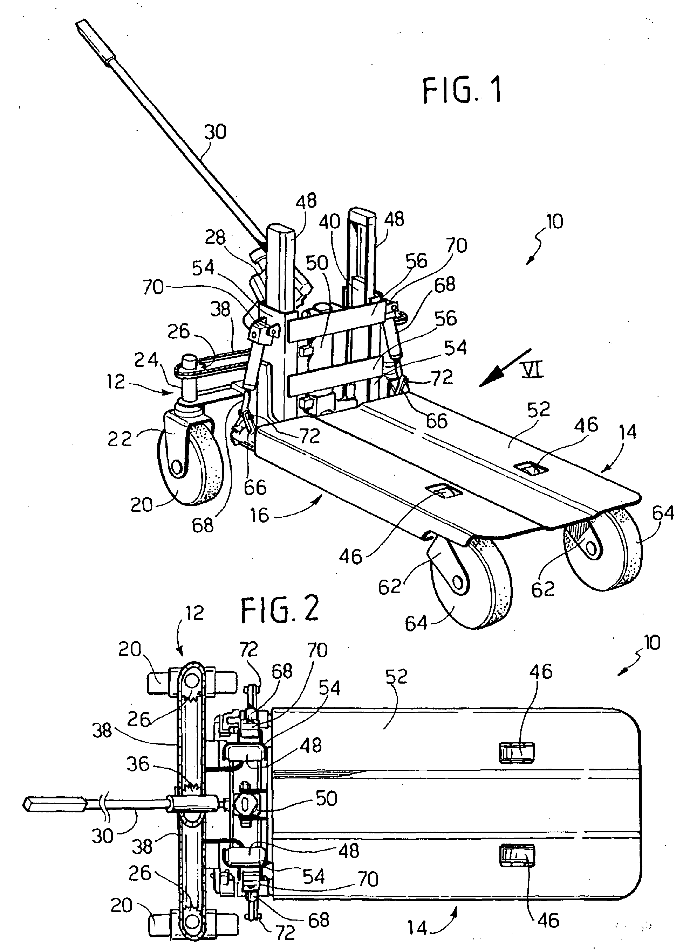

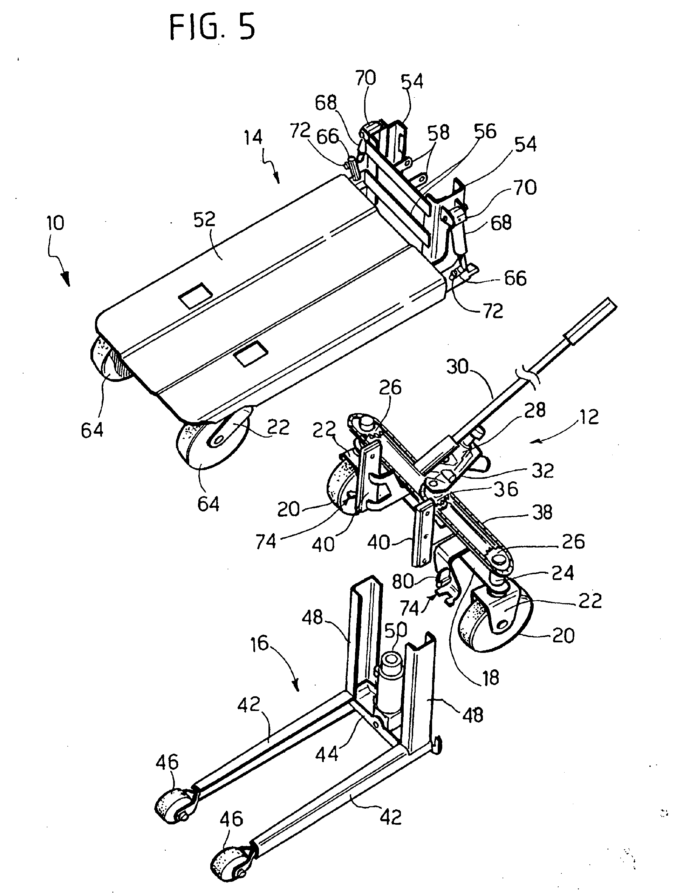

With reference to Figures 1 to 5, the reference number 10 designates a device for handling pallets. With particular reference to Figure 5, the device 10 comprises three main assemblies: a base structure 12; a load supporting structure 14; and a bottom supporting structure 16.

The base structure 12 comprises a cross member 18, which carries two steering wheels 20. Each of the two wheels 20 is carried in such a way that it is free to turn by a fork element 22 fixed to a pin with vertical axis 24, which is in turn mounted so that it is able to turn with respect to the cross member 18 about a respective vertical axis orthogonal to the axis of rotation of the wheel 20. Each vertical pin 24 is fixed to a gear wheel 26 of an ellipsoidal shape.

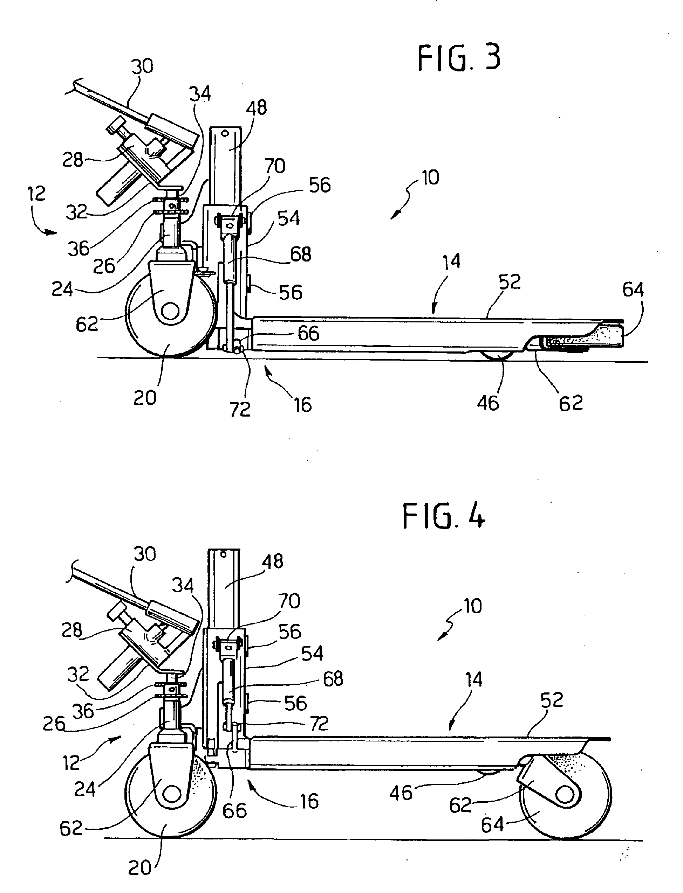

The base structure 12 carries a hydraulic pump 28, connected to an actuating lever 30. As may be seen in particular in Figures 3 and 4, the assembly including the hydraulic pump 28 and the actuating lever 30 is carried by a support 32 fixed to a pin 34 located in a central position of the cross member 18 and able to turn about a vertical axis. A user, by means of the lever 30, can control rotation of the hydraulic pump 28 and of the pin 34 about a vertical axis. Said rotation produces, by means of the chains 38, a movement of steering of the wheels 20.

The lever 30 is also used for actuating the pump 28. The user can increase the pressure in the hydraulic circuit by causing the lever to oscillate about a horizontal axis from the top downwards.

With reference to Figure 5, the base structure 12 comprises a vertical guide, formed by two guide elements 40 fixed to the cross member 18.

Once again with reference to Figure 5, the bottom supporting structure 16 comprises two horizontal arms 42, which project from a base 44. The two arms 42 carry at their free ends two idler rollers 46. Two vertical uprights 48 with C-shaped section extend upwards from the base 24 and are fixed to the latter. The two vertical uprights 48 engage slidably in a vertical direction the two guide elements 40. The base 44 of the bottom supporting structure 16 carries a hydraulic cylinder 50.

The load supporting structure 14 comprises a horizontal supporting wall 52 preferably consisting of bent metal plate. The wall 52 is fixed to a pair of guide elements 54 with C-shaped section, which slidably engage the outer side of the uprights 48 of the bottom supporting structure 16. The two guide elements 54 are connected together for instance by means of a pair of cross members 56.

The hydraulic cylinder 50 has a bottom end connected to the base 44 of the bottom supporting structure 16 and a top end connected to the load supporting structure 14. More precisely, the top end of the hydraulic cylinder 50 is connected to a pair of flanges 58 fixed to one of the cross members 56.

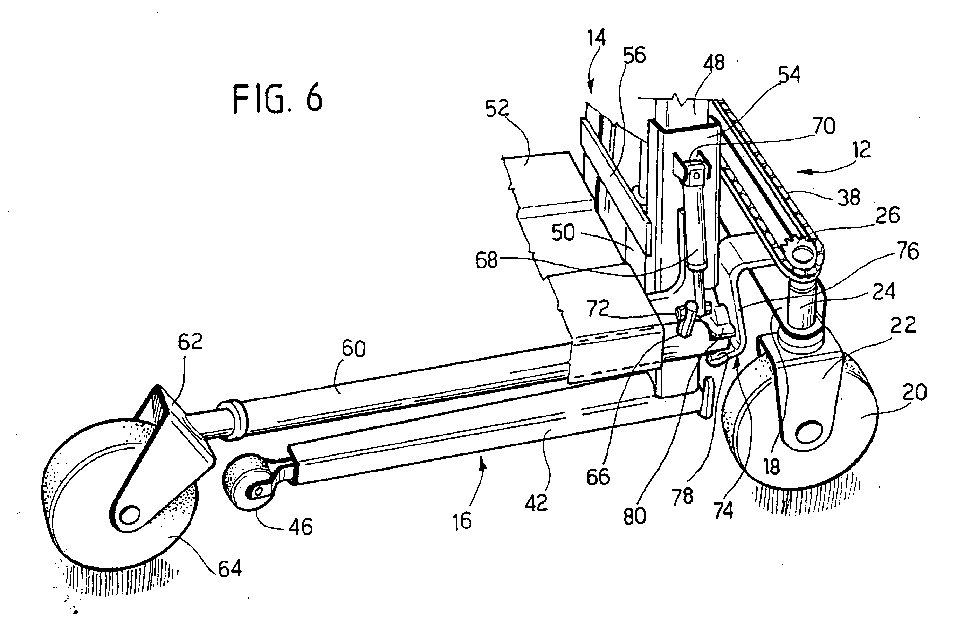

With reference in particular to Figures 6, 7 and 8, along the two longitudinal edges of the horizontal supporting wall 52 there are made two seats, within each of which is housed a shaft 60. Each of the two shafts 60 is able to turn about its own longitudinal axis with respect to the horizontal wall 52. Each shaft 60 carries at one of its ends a fork element 62, which carries a freely rotatable wheel 64. The wheels 64 are arranged on the side opposite to the horizontal wall 52 with respect to the wheels 20 of the basic structure 12.

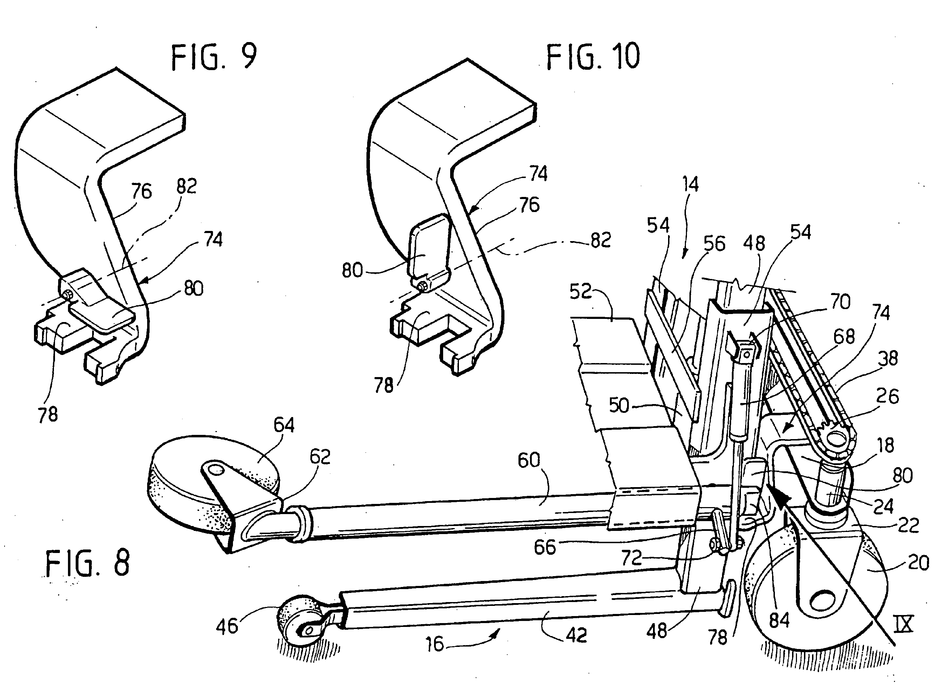

Once again with reference to Figures 6 to 8, each shaft carries, at the end opposite to the wheel 64, a transverse appendage 66. A hydraulic cylinder 68 is associated to each shaft 60. Each cylinder 68 has a first end 70, articulated on the outer side of the respective guide element 54, and a second end 72, articulated to the transverse appendage 66 of the shaft 60. Actuation of the cylinder 68 enables the shaft to be moved between the operating positions illustrated in Figures. 6 and 8. In the position of Figure 6, the axis of rotation of the wheels 64 is horizontal and parallel to the axis of rotation of the wheels 20. In the configuration of Figure 8, the wheels 64 extend parallel to the horizontal wall 52, with their axis of rotation oriented vertically.

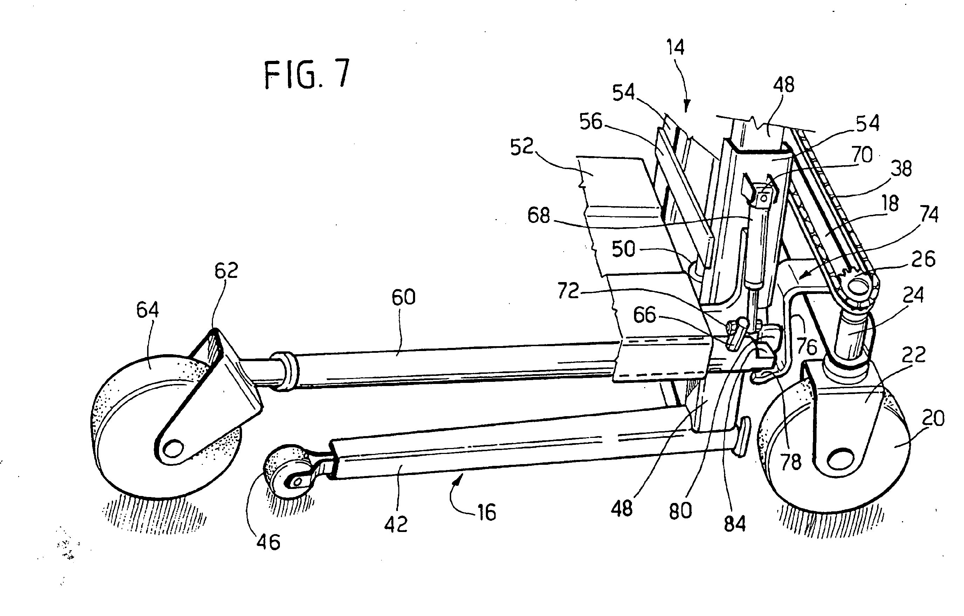

Each shaft 60 is associated to a clamping device 74, designed to clamp the shaft 60 in the position in which the respective wheel 64 is set with its own axis horizontal. With reference to Figures 7, 9 and 10, the clamping device 74 comprises a flange 76 fixed to the cross member 18 of the base structure 12. The flange 76 has a horizontal resting surface 78 and a clamping element 80, articulated to the flange about an axis 82 parallel to the axis of rotation of the shaft 60. The clamping element 80 is mobile between the clamping position, illustrated in Figure 9 (in which it extends parallel to the resting surface 78), and the position of release, illustrated in Figure 10. The end of the shaft 60 opposite to the wheel 64 has a flattened area 84 which, in the clamping position, is set between the clamping element 80 and the surface 78, so as to prevent any undesired rotation of the shaft 60 about its own axis.

The sequence of operation of the device for handling pallets according to the present invention will now be described with reference to Figures 3, 4 and 6-8.

The position of transport of the load is illustrated in Figures 4 and 6. In this position, the structure for supporting the load 14 rests on the floor by means of the wheels 64. The hydraulic cylinder 50 is in its completely retracted position. Consequently, the bottom supporting structure 16 is in its position of maximum lifting from the ground and is housed underneath the horizontal supporting wall 52. This configuration of the device is particularly suited to the transport of loads on rough surfaces, given that rolling occurs on the wheels 20, 64 of large diameter.

To carry out picking-up or release of the pallets, the device 10 assumes the configuration illustrated in Figure 3. Starting from the configuration of Figure 4, the cylinder 50 is carried in its position of maximum extension. The bottom supporting structure 16 is lowered until the rollers 46 come into contact with the floor. This configuration is illustrated in Figure 7. In the position of Figure 7, both the bottom supporting structure 16 and the load supporting structure 14 rest on the floor. By continuing to slide out, the cylinder 50 is carried into the position of maximum extension, and the device 10 is raised off the floor; resting on the ground is provided by the wheels 20 and by the rollers 46. Next, the hydraulic cylinders 50, which control rotation of the shafts 60 between the position illustrated in Figure 7 and the position illustrated in Figure 8, are actuated. Finally, the cylinder 50 is brought from the extended position to the retracted position. Following upon said movement of the cylinder, the load supporting structure 14 is lowered until it reaches the position illustrated in Figures 3 and 8.

The rollers 46 of the bottom supporting structure 16 have a diameter that is substantially smaller than the diameter of the wheels 20, 64. The diameter of the rollers 46 is determined in such a way that, in the configuration of Figure 3, the load supporting structure 14 may be inserted underneath pallets with standard dimensions.

After performing the operations of loading and unloading of a pallet, the operations previously described are repeated in a reverse direction so as to bring the device back into the configuration of transport illustrated in Figure 4.

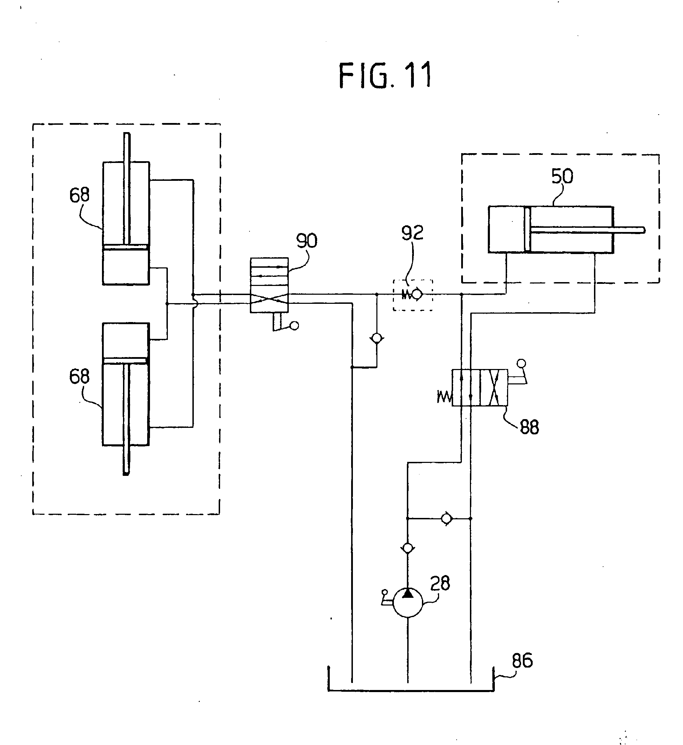

Figure 11 illustrates the diagram of the hydraulic circuit of the device according to the invention. The hydraulic control circuit comprises a fluid reservoir 86, the pump 28, the cylinder 50, which controls lifting and lowering of the structure for supporting the load 14 and of the bottom supporting structure 16, and the two cylinders 68, which control rotation of the wheels 64 between the resting position on the floor and the raised, inoperative position. The hydraulic circuit moreover comprises a first two-way control valve 88, a second two-way control valve 90, and a pressure-regulating valve 92. The valve 92 is calibrated at a pre-set pressure of intervention. This valve enables actuation of the cylinders 68 only when the lifting cylinder 50 is in the completely extended position. This is a safety function, which prevents the wheels 64 from being turned over into the inoperative position before the bottom resting structure 16 comes into contact with the floor.

## Claims

1. A device for handling pallets, comprising:
- a base structure (12), equipped with a first pair of wheels (20);
- a load supporting structure (14), which is movable in a vertical direction with respect to the base structure (12) and is equipped with a second pair of wheels (64), in which the wheels of the load supporting structure (14) may be displaced between a resting position on the floor and an inoperative position; and
- a bottom supporting structure (16) equipped with a pair of rollers (46) for resting on the floor, which have a diameter that is substantially smaller than the diameter of said wheels (20, 64)
wherein the bottom supporting structure (16) is movable in a vertical direction with respect to the base structure (12) between a position of transport of load and a pick-up or release position, wherein in the position of transport of load the load supporting structure (14) rests on the ground by means of said wheels (64) and the bottom supporting structure is lifted from the ground, and in the pick-up or release position the rollers (46) of the bottom supporting structure rest on the ground, the wheels (64) of the load supporting structure are in the inoperative position and the load supporting structure (14) is lowered on the bottom supporting structure (16), **characterised by** the load supporting structure (14) comprising two horizontal shafts (60), each of which carries a respective wheel (64), each of said shafts (60) being able to turn about its own longitudinal axis for displacing the respective wheel (64) between the resting position and the inoperative position.

2. The device according to Claim 1, **characterized in that** it comprises a hydraulic cylinder (50) having a first end connected to the bottom supporting structure (16) and a second end connected to the load supporting structure (14).

3. The device according to Claim 2, **characterized in that** the bottom supporting structure (16) comprises two guide uprights (48), which slidably engage in a vertical direction two guide elements (40) carried by the base structure (12).

4. The device according to Claim 3, **characterized in that** the load supporting structure (14) comprises two guide elements (54), which slidably engage in a vertical direction the uprights (48) of the bottom supporting structure (16).

5. The device according to Claim 2, **characterized in that** the base structure (12) carries a pump (28) hydraulically connected to said hydraulic cylinder (50).

6. The device according to Claim 5, **characterized in that** the wheels (20) of the base structure (12) can turn about the respective vertical axes and are associated to a steering device controlled by a lever (30), operatively associated to said pump (28).

7. The device according to Claim 6, **characterized in that** the steering device comprises two chains (38), each of which co-operates with a first gear wheel (36) associated to said lever (30) and with a second ellipsoidal gear wheel (26) associated to a respective wheel (20).

8. The device according to Claim 1, **characterized in that** each of said shafts (60) is associated to a respective hydraulic cylinder (68), which controls rotation of the shaft (60) between the operating positions corresponding to the two positions of the wheel (64).

## Patentansprüche

1. Vorrichtung zum Handhaben von Paletten, aufweisend:
- einen Basisaufbau (12), ausgerüstet mit einem ersten Paar von Rädern (20);
- einen Lasttrageaufbau (14), welcher in einer vertikalen Richtung in Bezug zu dem Basisaufbau (12) bewegbar und mit einem zweiten Paar von Rädern (64) ausgerüstet ist, bei welchem die Räder des Lasttrageaufbaus (14) zwischen einer Ruheposition auf dem Boden und einer nicht-betriebsfähigen Position verschiebbar sind; und
- einen Untertrageaufbau (16), ausgerüstet mit einem Paar von Rollen (46) zum Ruhen auf dem Boden, welche einen Durchmesser haben, welcher wesentlich kleiner ist als der Durchmesser der Räder (20, 64),
wobei der Untertrageaufbau (16) in einer vertikalen Richtung in Bezug zu dem Basisaufbau (12) zwischen einer Lasttransportposition und einer Aufnahme- oder Freigabeposition bewegbar ist, wobei in der Lasttransportposition der Lasttrageaufbau (14) auf dem Boden ruht mit Hilfe der Räder (64) und der Untertrageaufbau vom Boden angehoben ist und wobei in der Aufnahme- oder Freigabeposition die Rollen (46) des Untertrageaufbaus auf dem Boden ruhen, wobei die Räder (64) des Lasttrageaufbaus in der nicht-betriebsfähigen Position sind und der Lasttrageaufbau (14) auf den Untertrageaufbau (16) abgesenkt ist, **dadurch gekennzeichnet, dass** der Lasttrageaufbau (14) zwei horizontale Wellen (60) aufweist, wobei jede ein entsprechendes Rad (64) trägt, wobei jede der Wellen (60) um ihre eigene Längsachse drehbar ist zum Verschieben des jeweiligen Rades (64) zwischen der Ruheposition und der nicht-betriebsfähigen Position.

2. Vorrichtung nach Anspruch 1, **dadurch gekennzeichnet, dass** sie einen hydraulischen Zylinder (50) aufweist mit einem ersten Ende, welches mit dem Untertrageaufbau (16) verbunden ist, und einem zweiten Ende, welches mit dem Lasttrageaufbau (14) verbunden ist.

3. Vorrichtung nach Anspruch 2, **dadurch gekennzeichnet, dass** der Untertrageaufbau (16) zwei Führungspfosten (48) aufweist, welche gleitbar in einer vertikalen Richtung mit zwei Führungselementen (40) in Eingriff stehen, welche von dem Basisaufbau (12) getragen sind.

4. Vorrichtung nach Anspruch 3, **dadurch gekennzeichnet, dass** der Lasttrageaufbau (14) zwei Führungselemente (54) aufweist, welche gleitbar in einer vertikalen Richtung mit den Pfosten (48) des Untertrageaufbaus (16) in Eingriff stehen.

5. Vorrichtung nach Anspruch 2, **dadurch gekennzeichnet, dass** der Basisaufbau (12) eine Pumpe (28) trägt, welche hydraulisch mit dem hydraulischen Zylinder (50) verbunden ist.

6. Vorrichtung nach Anspruch 5, **dadurch gekennzeichnet, dass** die Räder (20) des Basisaufbaus (12) um die jeweiligen vertikalen Achsen drehbar und einer Steuervorrichtung zugeordnet sind, welche durch einen Hebel (30), betriebsmäßig der Pumpe (28) zugeordnet, gesteuert ist.

7. Vorrichtung nach Anspruch 6, **dadurch gekennzeichnet, dass** die Steuervorrichtung zwei Ketten (38) aufweist, wobei jede mit einem ersten Zahnrad (36), zugeordnet zu dem Hebel (30), und mit einem zweiten, ellipsenförmigen Zahnrad (26), zugeordnet zu einem jeweiligen Rad (20), zusammenwirkt.

8. Vorrichtung nach Anspruch 1, **dadurch gekennzeichnet, dass** jede der Wellen (60) einem jeweiligen hydraulischen Zylinder (68) zugeordnet ist, welcher die Drehung der Welle (60) zwischen den Betriebspositionen entsprechend den zwei Positionen des Rades (64) steuert.

## Revendications

1. Dispositif pour la manutention de palettes, comprenant :
une structure de base (12), équipée avec une première paire de roues (20) ;
une structure de support de charge (14), qui est mobile dans une direction verticale par rapport à la structure de base (12) et est équipée avec une seconde paire de roues (64), dans lequel les roues de la structure de support de charge (14) peuvent être déplacées entre une position de repos sur le sol et une position non opérationnelle ; et
une structure de support inférieure (16) équipée avec une paire de rouleaux (46) pour reposer sur le sol, qui ont un diamètre qui est sensiblement inférieur au diamètre desdites roues (20, 64),
dans lequel la structure de support inférieure (16) est mobile dans une direction verticale par rapport à la structure de base (12) entre une position de transport de charge et une position de prélèvement ou de libération, dans lequel dans la position de transport de charge, la structure de support de charge (14) repose sur le sol au moyen desdites roues (64) et la structure de support inférieure est soulevée du sol, et dans la position de prélèvement ou libération, les rouleaux (46) de la structure de support inférieure reposent sur le sol, les roues (64) de la structure de support de charge sont dans la position non opérationnelle et la structure de support de charge (14) est abaissée sur la structure de support inférieure (16), **caractérisé par** la structure de support de charge (14) qui comprend deux arbres horizontaux (60), dont chacun supporte une roue (64) respective, chacun desdits arbres (60) pouvant tourner autour de son propre axe longitudinal pour déplacer la roue (64) respective entre la position de repos et la position non opérationnelle.

2. Dispositif selon la revendication 1, **caractérisé en ce qu'**il comprend un vérin hydraulique (50) ayant une première extrémité raccordée à la structure de support inférieure (16) et une seconde extrémité raccordée à la structure de support de charge (14).

3. Dispositif selon la revendication 2, **caractérisé en ce que** la structure de support inférieure (16) comprend deux montants de guidage (48), qui mettent en prise de manière coulissante, dans une direction verticale, deux éléments de guidage (40) supportés par la structure de base (12).

4. Dispositif selon la revendication 3, **caractérisé en ce que** la structure de support de charge (14) comprend deux éléments de guidage (54), qui mettent en prise de manière coulissante, dans une direction verticale, les montants (48) de la structure de support inférieure (16).

5. Dispositif selon la revendication 2, **caractérisé en ce que** la structure de base (12) supporte une pompe (28) raccordée de manière hydraulique audit vérin hydraulique (50).

6. Dispositif selon la revendication 5, **caractérisé en ce que** les roues (20) de la structure de base (12) peuvent tourner autour des axes verticaux respectifs et sont associées à un dispositif de direction contrôlé par un levier (30), associé de manière opérationnelle à ladite pompe (28).

7. Dispositif selon la revendication 6, **caractérisé en ce que** le dispositif de direction comprend deux chaînes (38), dont chacune coopère avec une première roue d'engrenage (36) associée audit levier (30) et avec une seconde roue d'engrenage elliptique (26) associée à une roue (20) respective.

8. Dispositif selon la revendication 1, **caractérisé en ce que** chacun desdits arbres (60) est associé à un vérin hydraulique (68) respectif, qui commande la rotation de l'arbre (60) entre les positions de fonctionnement correspondant aux deux positions de la roue (64).
